# DEMANDE DE BREVET EUROPEEN

(11) **EP 2 624 415 A1**
(43) Date de publication de la demande: **07.08.2013**
(21) Numéro de dépôt: 13153668.2
(22) Date de dépôt: 01.02.2013
(51) Int. Cl.: H02K 1/14, H02K 3/52

(54) **Moteur électrique muni d'une plaque de connexion à crochets**

(30) Priorité: 01.02.2012 FR 1250949
(71) Demandeur: Faurecia Bloc Avant, 92000 Nanterre (FR); Phenix International, 70100 Gray (FR)
(72) Inventeur: Aubry, Jean-Marcel, 90140 Bourogne (FR); Brami, Luc, 92700 Colombes (FR)
(74) Mandataire: Domenego, Bertrand

(57) **Abrégé**

Moteur électrique comprenant :
- un stator comprenant des dents, espacées angulairement autour d'un axe (A) du stator,
- au moins deux ensembles de bobine (8), chaque ensemble de bobine (8) comprenant au moins une bobine (10) formée d'au moins un fil électrique enroulé autour d'une dent,
- une plaque de connexion (12) connectant électriquement le ou chaque ensemble de bobine (10) à une source d'alimentation électrique.

Une extrémité de chaque ensemble de bobine (10) est reliée à une extrémité d'un autre ensemble de bobine (10) par un pont de connexion (37),

la plaque de connexion (12) comprenant un ensemble de pistes de connexion comprenant au moins une piste de phase, connectée électriquement à une phase de la source d'alimentation électrique,

la ou chaque piste de phase étant munie d'un crochet de connexion électrique de phase, connecté électriquement à un premier pont de connexion (37) correspondant de manière à connecter électriquement ce premier pont de connexion (37) à la phase correspondante de la source d'alimentation.

## Description

La présente invention concerne un moteur électrique comprenant :
- un stator comprenant des dents, espacées angulairement autour d'un axe du stator,
- au moins deux ensembles de bobine, chaque ensemble de bobine comprenant au moins une bobine formée d'au moins un fil électrique enroulé autour d'une dent, et
- une plaque de connexion connectant électriquement le ou chaque ensemble de bobine à une source d'alimentation électrique.

Un tel moteur présente un grand nombre d'applications notamment dans un véhicule automobile par exemple pour l'aide à la direction, l'actionnement d'un groupe moto-ventilateur, le fonctionnement des aérateurs ou autre. Un tel moteur doit donc être peu encombrant et léger.

Dans ce type de moteur électrique, chaque enroulement ou bobine du stator est parcouru par un courant électrique, lequel induit dans cet enroulement un champ magnétique. La somme des champs magnétiques induits au stator crée un champ magnétique tournant du stator, lequel coopère avec le champ magnétique permanent crée par les aimants permanents du rotor pour entraîner en rotation le rotor, et de ce fait l'arbre du moteur qui en est solidaire.

Pour son alimentation en courant électrique, chaque enroulement est connecté électriquement à une source d'alimentation électrique. Les enroulements sont connectés entre un point commun et une phase d'alimentation dans le cas d'un montage dit « en étoile », et entre deux phases d'alimentation dans le cas d'un montage dit « en triangle ». Ainsi, deux connexions électriques doivent être réalisées pour chaque enroulement.

Il est possible de connecter directement les fils formant les enroulements à la source d'alimentation, c'est-à-dire à la ou aux phase(s) d'alimentation correspondante(s) et au point commun le cas échéant. Une telle solution ne donne cependant pas entière satisfaction. En effet, elle nécessite de connecter un grand nombre de fils individuels à des phases données de la source d'alimentation. Ce moteur est donc long à assembler et le procédé d'assemblage n'est pas automatisable, les connexions se faisant manuellement. En outre, le nombre important de connexions électriques à réaliser augmente le risque de défauts, voire d'erreurs de connexion, entraînant une panne de moteur.

L'invention a pour but de proposer un moteur électrique simple à assembler, et en particulier dont l'assemblage est réalisable de manière automatique.

A cet effet, l'invention a pour objet un moteur électrique du type précité, dans lequel une extrémité de chaque ensemble de bobine est reliée à une extrémité d'un autre ensemble de bobine par un pont de connexion, la plaque de connexion comprenant un ensemble de pistes de connexion comprenant au moins une piste de phase, connectée électriquement à une phase de la source d'alimentation électrique, la ou chaque piste de phase étant munie d'un crochet de connexion électrique de phase, connecté électriquement à un premier pont de connexion correspondant de manière à connecter électriquement ce premier pont de connexion à la phase correspondante de la source d'alimentation.

Le moteur électrique selon l'invention peut également comprendre l'une ou plusieurs des caractéristiques suivantes, prise(s) isolément ou selon toute(s) combinaison(s) techniquement possible(s) :
- l'ensemble de pistes de connexion comprend en outre une piste commune, laquelle comprend au moins un crochet de connexion électrique commun, le ou chaque crochet de connexion électrique commun étant connecté électriquement à un deuxième pont de connexion correspondant de manière à connecter électriquement ce deuxième pont de connexion à la piste commune ;
- la source d'alimentation est triphasée, et l'ensemble de pistes de connexion comprend trois pistes de phase, connectées chacune à une phase de la source d'alimentation, chaque piste de phase comprenant un crochet de connexion électrique de phase connecté électriquement à un pont de connexion correspondant de manière à connecter électriquement ce pont de connexion à la phase correspondante de la source d'alimentation ;
- la somme du nombre de crochets de connexion électrique de phase et du nombre de crochets de connexion électrique communs est inférieure ou égale au nombre de bobines du stator ;
- la somme du nombre de crochets de connexion électrique de phase et du nombre de crochets de connexion électrique communs est égale à la moitié du nombre de bobines du stator ;
- chaque bobine comprend une tête de bobine avant (orientée vers la plaque de connexion, et le ou chaque premier pont de connexion comprend une zone de connexion en contact avec un crochet de connexion électrique de phase correspondant, la zone de connexion étant espacée des têtes de bobine avant parallèlement à l'axe du stator ;
- le ou chaque premier pont de connexion comprend une zone de connexion en contact avec un crochet de connexion électrique de phase correspondant, et la zone de connexion s'étend sensiblement perpendiculairement à l'axe du stator ;
- le ou chaque crochet de connexion électrique de phase délimite un fond de crochet, en contact avec la zone de connexion du premier pont de connexion correspondant, le fond de crochet s'étendant sensiblement perpendiculairement à l'axe du stator ;
- le stator comprend un insert présentant des surfaces de guidage, espacées entre elles suivant la circonférence du stator et espacées chacune des têtes de bobine avant parallèlement à l'axe du stator, et le ou chaque pont de connexion est reçu en appui sur au moins deux surfaces de guidage adjacentes selon la circonférence du stator, la zone de connexion du pont de connexion étant formée par une partie du pont de connexion localisée entre ces deux surfaces de guidage ;
- les surfaces de guidage s'étendent chacune sensiblement normalement à l'axe du stator, en particulier suivant la circonférence du stator ;
- au moins un premier ensemble de bobine et un deuxième ensemble de bobine sont formés à partir d'un même fil d'enroulement, le pont de connexion entre le premier ensemble de bobine et le deuxième ensemble de bobine étant formé par une partie dudit fil d'enroulement s'étendant entre l'extrémité du premier ensemble de bobine et l'extrémité du deuxième ensemble de bobine reliées entre elles par le pont de connexion ;
- la ou chaque piste de connexion est formée par une pièce conductrice de courant en forme d'arc de cercle.
- l'ensemble de pistes de connexion comprend au moins deux pistes de connexion solidarisées mécaniquement entre elles, notamment par surmoulage par une matière plastique ou par clippage.

L'invention a également pour objet un procédé d'assemblage d'un moteur électrique tel que décrit précédemment, comprenant les étapes de :
- former au moins deux ensembles de bobine par enroulement d'un fil d'enroulement autour de dents correspondantes du stator et relier une extrémité de chaque ensemble de bobine à une extrémité d'un autre ensemble de bobine par un pont de connexion, le pont de connexion comprenant une zone de connexion destinée à venir en contact avec un crochet de connexion correspondant de la plaque de connexion ;
- assembler la plaque de connexion d'une pièce au stator en approchant la plaque de connexion vers le stator selon la direction longitudinale chaque crochet de connexion étant disposé au droit d'une zone de connexion d'un pont de connexion correspondant jusqu'à ce que la plaque de connexion arrive en butée sur le stator, chaque crochet de connexion étant alors en contact avec la zone de connexion du pont de connexion correspondant.

L'invention sera mieux comprise à la lecture de la description qui va suivre, donnée uniquement à titre d'exemple, et faite en se référant aux dessins annexés, sur lesquels :
- la figure 1 est une vue en perspective d'un stator de moteur électrique selon un premier mode de réalisation de l'invention ;
- la figure 2 est une vue en perspective du stator de la figure 1, la plaque de connexion ayant été retirée ;
- la figure 3 est une vue en perspective de la plaque de connexion de la figure 1 ;
- la figure 4 est une vue de dessus de la plaque de connexion de la figure 1 ;
- la figure 5 est une vue en perspective d'un insert du stator de la figure 1 ;
- la figure 6 est une représentation schématique d'un schéma de bobinage du stator de la figure 1 ;
- la figure 7 est une vue analogue à celle de la figure 1 d'un stator selon un deuxième mode de réalisation ;
- la figure 8 est une vue en perspective du stator de la figure 7, la plaque de connexion ayant été retirée ;
- la figure 9 est une vue en perspective de la plaque de connexion de la figure 7;
- la figure 10 est une vue de dessus de la plaque de connexion de la figure 7 ;
- la figure 11 est une vue en perspective d'un insert du stator de la figure 7 ;
- la figure 12 est une représentation schématique d'un schéma de bobinage du stator de la figure 7 ; et
- la figure 13 est une vue en perspective du stator de la figure 7 avant sa fermeture et avant mise en place de la plaque de connexion.

L'invention a pour objet un moteur électrique sans balais (encore appelé moteur « brushless ») comprenant un stator 4 et un rotor (non représenté) propre à entraîner en rotation un arbre du moteur électrique. Le rotor comprend des aimants permanents. Il s'agit par exemple d'un rotor à aimants enterrés ou d'un rotor à aimants déposés.

Le stator 4 comprend :
- un corps de stator 5 d'axe central A muni d'une pluralité de dents 16, espacées régulièrement autour de la circonférence du stator 4, et s'étendant radialement en direction du rotor à partir du corps de stator 5 ;
- au moins un ensemble de bobine 8, formé d'une bobine 10 ou d'une pluralité de bobines 10 connectées en série, chaque bobine 10 de l'ensemble 8 étant formée d'au moins un fil électrique enroulé autour d'une dent 16 correspondante ;
- un insert 50 ;
- une plaque de connexion 12 propre à connecter électriquement le ou chaque ensemble de bobine 8 à une source d'alimentation électrique.

Chacun de ces éléments sera expliqué plus en détail par la suite.

La description qui suit est faite en référence à un stator 4 bobiné en étoile et alimenté en courant triphasé. Cependant, l'invention s'applique également à un stator 4 alimenté en courant monophasé ou biphasé ou triphasé bobiné en triangle.

Dans la suite de la description, on appelle « direction longitudinale » la direction selon laquelle s'étend l'axe central A du corps de stator 5. Les termes « intérieur » et « extérieur » sont utilisés en référence à l'axe A du stator 4, l'éloignement à l'axe A augmentant de l'intérieur vers l'extérieur.

Le corps de stator 5 présente une forme sensiblement cylindrique d'axe central A, parallèle à l'axe de l'arbre entraîné en rotation du moteur électrique. Le corps de stator 5 est notamment de forme cylindrique à base circulaire.

Dans le mode de réalisation représenté, le moteur est un moteur à rotor interne. Les dents 16 s'étendent radialement vers l'intérieur, c'est-à-dire en direction de l'axe A du stator 4, à partir du corps de stator 5. Les dents 16 sont réalisées dans un matériau ferromagnétique, conducteur du flux magnétique. Dans le mode de réalisation représenté sur les figures, le stator 4 comprend douze dents 16. En variante, le stator 4 comprend tout autre nombre de dents 16 adapté.

La plaque de connexion 12 est agencée sur une face du stator 4. Elle s'étend sensiblement transversalement à la direction longitudinale A.

Dans la suite de la description, on appelle « face avant » 14 du stator 4 la face du stator 4 du côté de laquelle est agencée la plaque de connexion 12. Les termes « avant » et « arrière » sont utilisés en référence à la face avant 14 du stator 4.

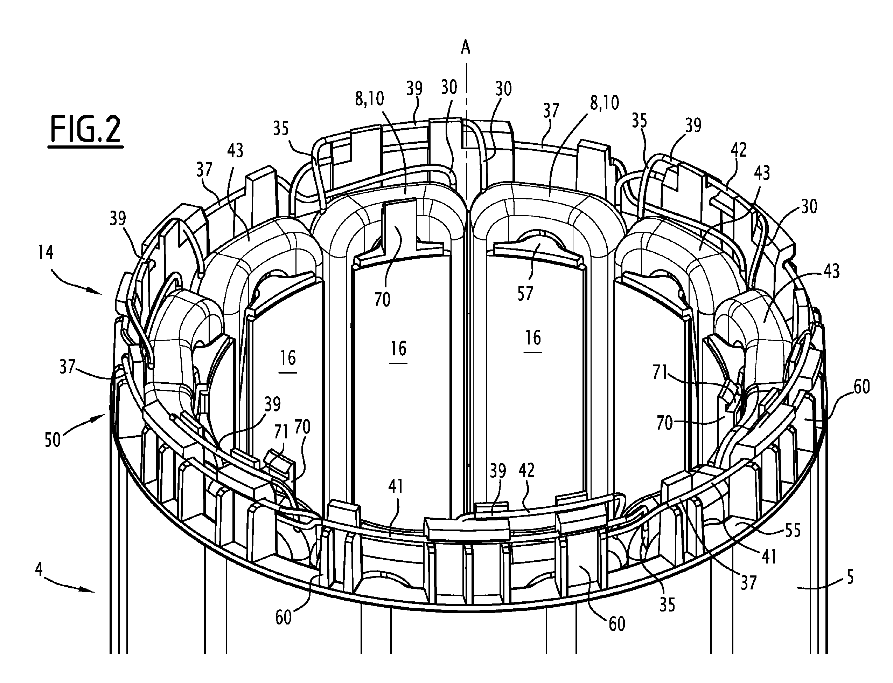

Comme illustré notamment sur la figure 2, chaque ensemble de bobine 8 comprend une première extrémité 30 et une deuxième extrémité 35. Chaque extrémité 30, 35 est formée par une partie du fil d'enroulement enroulé autour des dents 16 correspondantes dépassant d'une bobine 10 de l'ensemble de bobine 8.

La première extrémité 30 est reliée à une extrémité 35 correspondante d'un autre ensemble de bobine 8 par un premier pont de connexion 37. La deuxième extrémité 35 est reliée à une extrémité 30 correspondante d'un autre ensemble de bobine 8 par un deuxième pont de connexion 39. Le pont de connexion 37, 39 a la forme d'un fil.

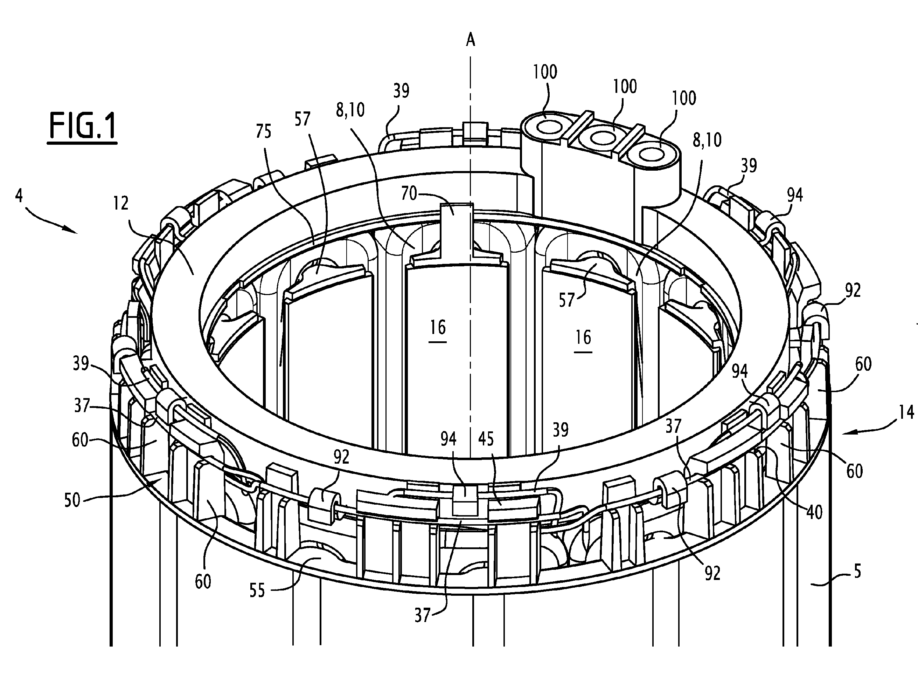

Dans le premier mode de réalisation représenté sur les figures 1 à 6, chaque ensemble de bobine 8 est formé par une bobine 10 enroulée autour d'une dent 16 correspondante.

Si l'on considère trois bobines 10 distinctes, appelées respectivement première bobine, deuxième bobine et troisième bobine :
- la première extrémité 30 de la première bobine est reliée à une extrémité correspondante d'une deuxième bobine par un premier pont de connexion 37 ; et
- la deuxième extrémité 35 de la première bobine est reliée à une extrémité correspondante d'une troisième bobine par un deuxième pont de connexion 39.

Le premier pont de connexion 37 s'étend selon la circonférence du stator 4 entre la première bobine et la deuxième bobine. Le deuxième pont de connexion 39 s'étend selon la circonférence du stator 4 entre la première bobine et la troisième bobine.

En particulier, la première, la deuxième et la troisième bobine sont réalisées à partir d'un même fil d'enroulement. Le premier pont de connexion 37 est alors formé par la partie du fil d'enroulement s'étendant entre la première extrémité 30 de la première bobine et l'extrémité correspondante de la deuxième bobine. Le deuxième pont de connexion 39 est formé par la partie du fil d'enroulement s'étendant entre la deuxième extrémité 35 de la première bobine et l'extrémité correspondante de la troisième bobine. Le fil d'enroulement est par exemple un fil en cuivre, entouré d'une gaine réalisée dans un matériau isolant électrique.

Les ponts de connexion 37, 39 s'étendent sur la face avant 14 du stator 4, c'est-à-dire du côté de la plaque de connexion 12. Ils s'étendent sensiblement extérieurement aux bobines 8. Chaque pont de connexion 37, 39 comprend, sur une partie s'étendant sensiblement suivant la circonférence du stator 4, une zone de connexion 41, 42 destinée à venir en contact avec un crochet de connexion électrique correspondant de la plaque de connexion 12, comme cela sera décrit ultérieurement.

La zone de connexion 41, 42 de chaque pont de connexion 37, 39 est espacée axialement des têtes de bobine avant 43 situées du côté de la plaque de connexion 12. Par tête de bobine avant, on entend la partie extrême de la bobine 10 s'étendant en regard de la plaque de connexion 12. La zone de connexion 41, 42 s'étend à l'avant de la tête de bobine avant 43.

A cet effet, la partie de fil d'enroulement formant le pont de connexion 37, 39 prend appui sur des surfaces de guidage prévues sur le stator 4. Les surfaces de guidage sont propres à guider le fil d'enroulement respectivement entre la première et la deuxième bobine et entre la première et la troisième bobine de manière à former les ponts de connexion 37, 39 reliant ces bobines.

Plus particulièrement, le stator 4 comprend des premières surfaces de guidage 40 et des deuxièmes surfaces de guidage 45. Les deuxièmes surfaces de guidage 45 sont agencées à une hauteur différente de celle des premières surfaces de guidage 40, la hauteur étant prise parallèlement à la direction longitudinale. Dans le mode de réalisation représenté, les premières surfaces de guidage 40 et les deuxièmes surfaces de guidage 45 sont sensiblement parallèles entre elles. Elles s'étendent sensiblement normalement à la direction longitudinale. En particulier, elles s'étendent sensiblement parallèlement à la circonférence du stator 4.

La partie du fil d'enroulement formant le pont de connexion 37, 39 est en appui respectivement sur au moins deux premières surfaces de guidage 40 ou sur au moins deux deuxièmes surfaces de guidage 45, espacées selon la circonférence du stator 4. La zone de connexion 41, 42 d'un pont de connexion 37, 39 donné est formée sur la partie du pont de connexion 37, 39 s'étendant circonférentiellement entre deux premières surfaces de guidage 40 adjacentes ou entre deux deuxièmes surfaces de guidage 45 adjacentes sur lesquelles le pont de connexion 37, 39 prend appui. Les surfaces de guidage assurent ainsi l'espacement axial de la zone de connexion 41, 42 par rapport aux têtes de bobine avant 43. Elles assurent en outre le positionnement de la zone de connexion 41, 42 par rapport au crochet de connexion électrique correspondant. Enfin, elles assurent le maintien de la zone de connexion électrique 41, 42 par rapport au crochet de connexion électrique correspondant dans la position souhaitée lors de la mise en place de la plaque de connexion 12.

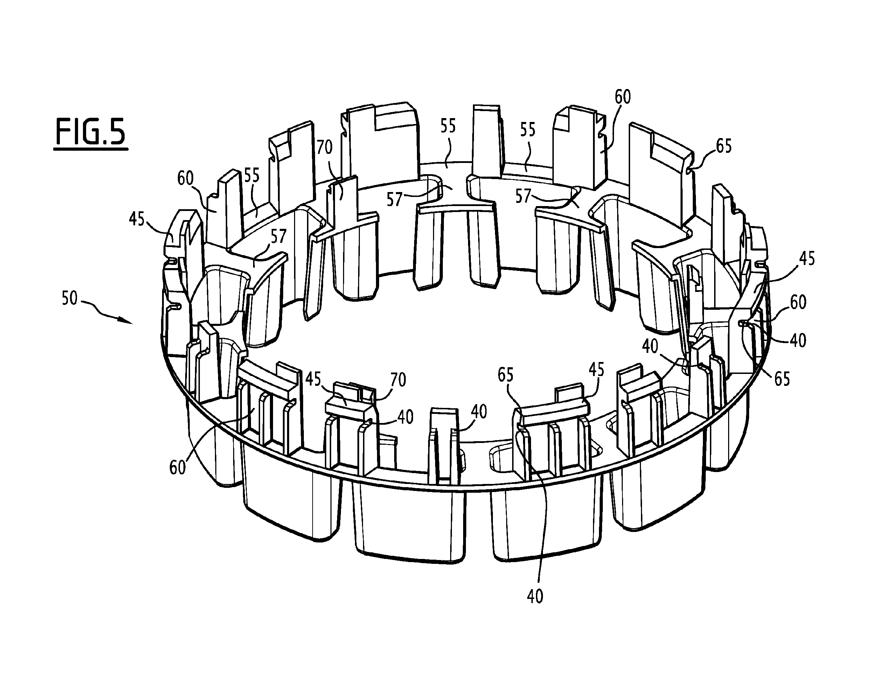

Les surfaces de guidage 40, 45 sont plus particulièrement prévues sur l'insert 50. L'insert 50 est illustré plus particulièrement sur la figure 5. Il a, dans l'exemple représenté, un contour sensiblement cylindrique d'axe confondu avec l'axe central A du stator 4. Il présente un diamètre extérieur sensiblement égal à celui du stator 4, en particulier du corps de stator 5.

L'insert 50 est réalisé d'une pièce, par exemple par moulage. Il est par exemple réalisé dans un matériau isolant électrique, notamment en matière plastique.

L'insert 50 comprend un rebord 55 s'étendant selon la circonférence du stator 4. Ce rebord 55 s'étend dans un plan sensiblement perpendiculaire à la direction longitudinale. Il prend appui sur le corps de stator 5. Dans le mode de réalisation représenté, le rebord 55 est sensiblement annulaire. L'insert 50 comprend en outre une pluralité d'organes d'isolation 57 en saillie radiale vers l'intérieur. Chacun de ces organes d'isolation 57 est mis en place sur l'extrémité avant d'une dent 16 correspondante de manière à épouser la surface avant et les surfaces latérales de cette dent 16 sur au moins une partie de leur hauteur, prise selon la direction longitudinale. La surface intérieure de la dent 16 est laissée libre afin de ne pas gêner la circulation du flux magnétique à partir de la dent 16 en direction de l'entrefer du moteur. Du côté de la face avant 14, les bobines 10 sont formées sur les organes d'isolation 57 de l'insert 50. Ainsi, l'organe d'isolation 57 est interposé entre la tête de bobine avant 43 et la dent 16. De manière connue, les organes d'isolation 57 ont pour fonction d'isoler électriquement les bobines 10 des dents 16. Les organes d'isolation 57 sont venus de matière avec le rebord 55.

Dans l'exemple représenté, chaque organe d'isolation 57 est muni d'une paroi de blocage 58 en saillie vers l'avant à partir d'une surface avant 59 de l'organe d'isolation 57. Cette paroi de blocage 58 a pour fonction de bloquer le bobinage 10 formé autour de la dent 16 correspondante à l'encontre d'un déplacement vers l'intérieur du stator 4.

L'insert 50 comprend en outre une pluralité de pattes de guidage 60 en saillie vers l'avant à partir du rebord 55. Les pattes de guidage 60 sont venues de matière avec le rebord 55. Les premières et deuxièmes surfaces de guidage 40, 45 sont prévues sur les pattes de guidage 60.

Dans l'exemple représenté, certaines pattes de guidage 60 comprennent une première surface de guidage 40 et une deuxième surface de guidage 45. D'autres pattes de guidage 60 comprennent uniquement une première surface de guidage 40. Certaines pattes de guidage 60 comprennent en outre une surface de blocage 65 (figure 5). La surface de blocage 65 surmonte la première surface de guidage 40. La partie du fil d'enroulement en appui sur la première surface de guidage 40 est retenue à l'encontre d'un déplacement vers l'avant selon la direction longitudinale par la surface de blocage 65.

L'insert 50 est muni en outre d'au moins un organe de solidarisation 70 de l'insert 50 à la plaque de connexion 12. Dans l'exemple représenté (figure 1), l'organe de solidarisation 70 est formé par une patte d'encliquetage. La patte d'encliquetage coopère avec un rebord 75 prévu sur la plaque de connexion 12. Le rebord 75 est annulaire dans l'exemple représenté. Dans l'exemple représenté, l'insert 50 comprend trois organes de solidarisation 70. Chaque organe de solidarisation 70 comprend une portée d'appui 71, recevant en appui longitudinal la plaque de connexion 12.

La plaque de connexion 12 comprend un ensemble de pistes de connexion. Dans l'exemple représenté, dans lequel le bobinage du stator est un bobinage en étoile, l'ensemble de pistes de connexion comprend des pistes de phase, connectées chacune électriquement à une phase respective de la source d'alimentation et une piste commune. La piste commune est, selon un mode de réalisation, connectée à la masse. Dans le cas, non représenté, d'un montage en triangle, l'ensemble de pistes de connexion comprend uniquement des pistes de phase et ne comprend pas de piste commune. Chaque piste de connexion est formée par une pièce conductrice de courant électrique. La pièce conductrice de courant électrique est réalisée dans un matériau conducteur de courant électrique, notamment en laiton ou en cuivre.

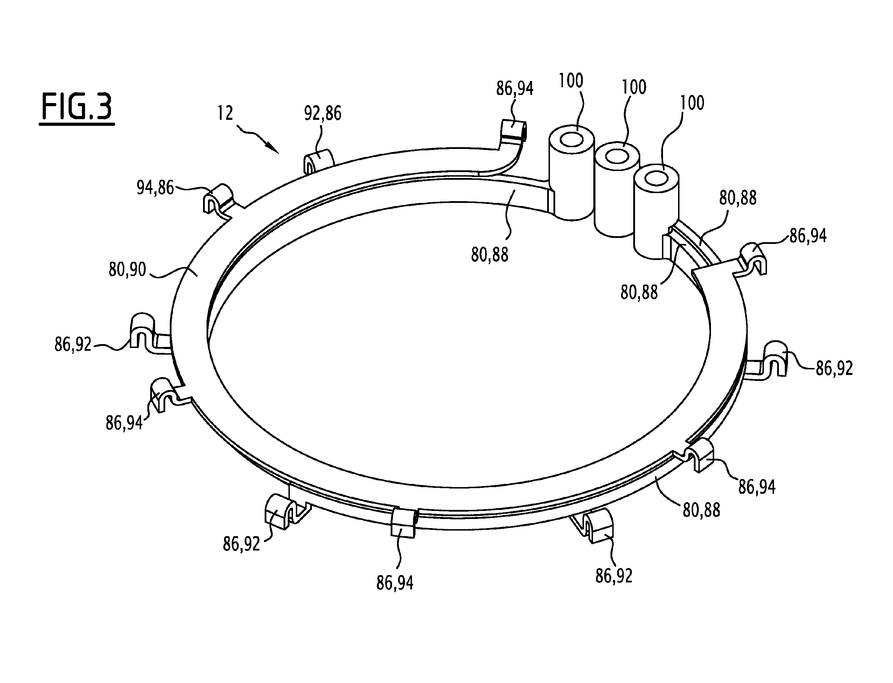

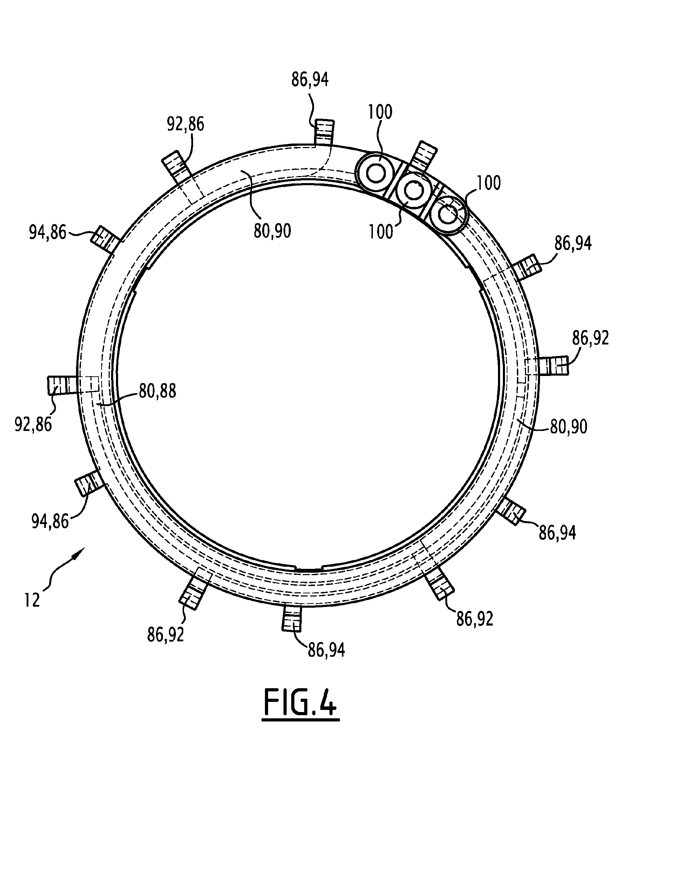

Dans le mode de réalisation représenté, et comme illustré plus particulièrement sur les figures 3 et 4, chaque pièce conductrice de courant électrique est formée par une bande de connexion 80 réalisée dans un matériau conducteur de courant électrique. Chaque bande de connexion 80 présente une forme d'arc de cercle. La plaque de connexion 12 présente ainsi une forme sensiblement annulaire. Chaque bande de connexion 80 présente par exemple une section environ égale à 6 mm².

Chaque bande de connexion 80 est munie de crochets de connexion électrique 86. Ces crochets 86 font saillie vers l'extérieur à partir d'un bord extérieur de la bande de connexion 80 correspondante. Ils sont recourbés en direction des bobines 10 du stator 4 selon la direction longitudinale. Ils présentent une concavité dirigée vers les bobines 10. En d'autres termes, les crochets 86 sont recourbés vers l'arrière. Chaque crochet de connexion 86 comprend un fond de crochet destiné à venir en contact avec une zone de contact 41, 42 respective. Chaque fond de crochet s'étend sensiblement perpendiculairement à la direction longitudinale, et en particulier suivant la circonférence du stator 4.

Pour simplifier la description, dans la suite, les bandes de connexion formant les pistes de phase seront appelées « bandes de phase » 88 et la bande de connexion formant la piste commune est appelée « bande commune » 90. Les crochets de connexion de la bande de phase 88 sont appelés « crochets de phase » 92. Les crochets de connexion de la bande commune 90 sont appelés « crochets communs » 94.

Dans le premier mode de réalisation, les crochets de phase 92 et les crochets communs 94 sont disposés de manière alternée suivant la circonférence de la plaque de connexion 12. Les crochets de phase 92 font saillie vers l'extérieur à partir de la plaque de connexion 12 à une première hauteur, et les crochets communs 94 font saillie vers l'extérieur à partir de la plaque de connexion 12 à une deuxième hauteur. La hauteur est mesurée suivant la direction longitudinale. Les crochets communs 94 sont en particulier agencés vers l'avant par rapport aux crochets de phase 92. Dans l'exemple représenté, tous les crochets de phase 92 sont agencés à la même hauteur. Tous les crochets communs 94 sont agencés à la même hauteur.

Dans le mode de réalisation représenté, les bandes de phase 88 sont sensiblement concentriques d'axe confondu avec l'axe central A du stator 4. Elles présentent chacune sensiblement la forme d'une portion de cylindre d'axe A. Chaque bande de phase 88 présente par exemple une épaisseur d'environ 1 mm, prise selon la direction radiale du stator 4 et une largeur d'environ 6 mm, prise parallèlement à la direction longitudinale du stator 4. Chaque bande de phase 88 comprend, à une première extrémité, une borne de connexion 100 à la phase correspondante de la source d'alimentation. Dans le mode de réalisation illustré, les bornes de connexion 100 des différentes bandes de phase sont adjacentes selon la circonférence de la plaque de connexion 12.

Dans le mode de réalisation représenté, la bande commune 90 est sensiblement plane. Elle présente une forme sensiblement annulaire. Elle s'étend sensiblement perpendiculairement à la direction de l'axe central A du stator 4. Elle s'étend à l'avant des bandes de phase 88.

Le nombre de bandes de phase 88 est égal au nombre de phases du courant d'alimentation fourni par la source d'alimentation. Dans le mode de réalisation représenté, dans lequel la source d'alimentation est une source d'alimentation triphasée, l'ensemble de pistes de connexion de la plaque de connexion 12 est formé par trois bandes de phase 88, connectées chacune à une phase respective de la source d'alimentation et une bande commune 90.

Dans le premier mode de réalisation, chaque bande de phase 88 présente deux crochets de phase 92. Les crochets de phase 92 de chaque bande de phase 88 sont disposés sur la bande de phase 88 de manière diamétralement opposée deux à deux. La plaque de connexion 12 comprend donc 6 crochets de phase 88. La bande commune 90 présente six crochets communs 94. Ainsi, la somme du nombre de crochets de phase 92 et du nombre de crochets communs 94 est égale au nombre de bobines 10 du stator 4.

Les bandes de connexion 80 sont solidarisées entre elles mécaniquement pour former la plaque de connexion 12, formant ainsi un ensemble d'une seule pièce simple à manipuler. Dans l'exemple représenté sur les figures, elles sont solidarisées entre elles par surmoulage par une matière plastique. Le surmoulage par la matière plastique isole également les bandes de connexion entre elles. La plaque de connexion 12 ainsi formée présente alors une forme sensiblement annulaire. Le surmoulage des bandes de connexion 80 pour former la plaque de connexion 12 est avantageux, car il permet d'assurer un bon maintien des bandes de connexion 80 au sein de la plaque de connexion 12, et notamment d'éviter leur déplacement relatif. En outre, il s'agit d'un procédé de solidarisation simple et peu coûteux à mettre en oeuvre.

Selon une première variante non représentée, les bandes de connexion 80 sont solidarisées entre elles par encliquetage. Selon une deuxième variante non représentée, les bandes de connexion 80 sont agencées dans un capot commun.

Les crochets de connexion 86 de la plaque de connexion 12 sont agencés chacun au droit d'une zone de connexion 41, 42 d'un pont de connexion 37, 39 correspondant lorsque la plaque de connexion 12 est assemblée sur le stator 4. Ils sont chacun en contact avec une zone de connexion 41, 42 respective, en particulier par le fond du crochet 86. Le contact électrique entre le crochet de connexion 86 et la zone de connexion 41, 42 est réalisé par soudage du crochet de connexion 86 au pont de connexion 37, 39 correspondant dans la zone de connexion 41, 42.

Chaque pont de connexion 37, 39 présente une seule zone de connexion 41, 42 avec un crochet de connexion 86 de la plaque de connexion 12. Par l'intermédiaire de la connexion électrique entre le crochet de connexion 86 et la zone de connexion 41 du premier pont de connexion 37 correspondant, la première extrémité 30 de la première bobine et l'extrémité correspondante de la deuxième bobine reliées entre elles par le premier pont de connexion 37 sont chacune connectées électriquement à la bande de connexion 80 à laquelle appartient le crochet de connexion 86. Deux connexions électriques sont donc réalisées au niveau de chaque contact entre un crochet 86 et un premier pont de connexion 37. Le même résultat est obtenu pour la deuxième extrémité 35 de la première bobine et l'extrémité correspondante de la troisième bobine reliées entre elles par le deuxième pont de connexion 39.

Plus particulièrement, dans le premier mode de réalisation, une extrémité de chaque bobine 10 est connectée électriquement à une bande de phase 88 correspondante par l'intermédiaire d'un crochet de phase 92 en contact avec la zone de connexion 41 du premier pont de connexion 37 et l'autre extrémité de chaque bobine 10 est connectée électriquement à la bande commune 90 par l'intermédiaire d'un crochet commun 94 en contact avec la zone de connexion 42 du deuxième pont de connexion 39.

La plaque de connexion 12 distribue ainsi le courant d'alimentation provenant de la source d'alimentation vers les différentes bobines 10 en fonction d'un schéma électrique de connexion prédéfini, connu en soi en fonction du mode d'alimentation du moteur.

Dans le mode de réalisation représenté, les premiers ponts de connexion 37 sont en appui sur les premières surfaces de guidage 40. La zone de connexion 41 du premier pont de connexion 37 s'étend entre deux premières surfaces de guidage 40 adjacentes. Ces surfaces de guidage 40 maintiennent la zone de connexion 41 sensiblement perpendiculaire à la direction longitudinale, c'est-à-dire sensiblement horizontale dans l'exemple représenté. Les deuxièmes ponts de connexion 39 sont en appui sur les deuxièmes surfaces de guidage 45. La zone de connexion 42 du deuxième pont de connexion 39 s'étend entre deux deuxièmes surfaces de guidage 45 adjacentes. Ces surfaces de guidage 45 maintiennent la zone de connexion 42 sensiblement perpendiculaire à la direction longitudinale, c'est-à-dire sensiblement horizontale dans l'exemple représenté.

Les premières surfaces de guidage 40 sont agencées à une hauteur correspondant à la hauteur des fonds des crochets de phase 92 lorsque la plaque de connexion 12 est dans sa position assemblée, c'est-à-dire lorsqu'elle est solidarisée au stator 4, notamment au moyen des organes de solidarisation 70. Les deuxièmes surfaces de guidage 45 sont agencées à une hauteur correspondant à la hauteur des fonds des crochets communs 94 lorsque la plaque de connexion 12 est dans sa position assemblée. Lorsque la plaque de connexion 12 est dans sa position assemblée, les crochets de phase 92 sont en contact avec les zones de connexion 41 des premiers ponts de connexion 37 correspondants et les crochets communs 94 sont en contact avec les deuxièmes ponts de connexion 39 correspondants.

Dans l'exemple représenté, les crochets de phase 92 font saillie à partir de la plaque de connexion 12 à l'arrière des crochets communs 94. Les premières surfaces de guidage 40 sont agencées à l'arrière des deuxièmes surfaces de guidage 45.

Le procédé d'assemblage du moteur selon l'invention va maintenant être décrit. Dans une première étape, on fournit un corps de stator 5 muni du côté de la face avant 14 d'un insert 50. On forme ensuite les bobines 10 en enroulant un fil d'enroulement autour de chaque dent 16 du stator 4.

Si l'on considère trois bobines 10 appelées respectivement première bobine, deuxième bobine et troisième bobine, on relie la première extrémité 30 de la première bobine à une extrémité correspondante de la deuxième bobine par le premier pont de connexion 37 et on relie la deuxième extrémité 35 de la première bobine à une extrémité correspondante de la troisième bobine par le deuxième pont de connexion 39. En particulier, dans le mode de réalisation représenté :
- on enroule le fil d'enroulement autour d'une dent 16 correspondante pour former la deuxième bobine, puis
- on fait passer le fil d'enroulement sur des surfaces de guidage 40 correspondantes localisées entre la deuxième bobine et la dent 16 destinée à recevoir la première bobine, de manière à former le premier pont de connexion 37, puis
- on enroule le fil d'enroulement autour de la dent 16 destinée à recevoir la première bobine, de manière à former la première bobine, puis
- on fait passer le fil d'enroulement sur des surfaces de guidage 45 correspondantes localisées entre la première bobine et la dent 16 destinée à recevoir la troisième bobine de manière à former le deuxième pont de connexion 39.

Ainsi, lors de la formation des ponts de connexion 37, 39, on amène la partie du fil d'enroulement formant le pont de connexion 37, 39 en appui soit contre les premières surfaces de guidage 40, soit contre les deuxièmes surfaces de guidage 45.

Dans le cas où le pont de connexion est un premier pont de connexion 37, la partie du fil formant le premier pont de connexion 37 est amenée en appui contre les premières surfaces de guidage 40. En option, le premier pont de connexion 37 est également bloqué longitudinalement à l'encontre d'un déplacement vers l'avant par la surface de blocage 65.

Dans le cas où le pont de connexion est un deuxième pont de connexion 39, la partie du fil d'enroulement formant le deuxième pont de connexion 39 est amenée en appui contre les deuxièmes surfaces de guidage 45.

L'enroulement du fil d'enroulement et le passage de ce fil d'enroulement sur les surfaces de guidage 40, 45 peuvent être réalisés de façon automatique au cours de la réalisation du bobinage du moteur. Il est connu de réaliser les enroulements du moteur de manière automatique au moyen d'un outil de bobinage. Selon l'invention, le bobinage de chaque bobine 10 est suivi de la mise en place du fil d'enroulement sur les surfaces de guidage 40, 45, cette mise en place étant effectuée de manière automatique par l'outil de bobinage.

On approche ensuite par l'avant la plaque de connexion 12 sur l'ensemble formé par le stator 4, l'insert 50 et les bobines 10 jusqu'à atteindre la position assemblée, dans laquelle les organes de solidarisation 70 sont encliquetés sur le rebord annulaire 75 de la plaque de connexion 12. La plaque de connexion 12 repose sur les portées d'appui 71 des organes de solidarisation 70. Lorsque la plaque de connexion 12 a atteint sa position assemblée, chaque crochet de connexion 86 est en contact avec la zone de connexion 41, 42 du pont de connexion 37, 39 correspondant, c'est-à-dire que les crochets de phase 92 sont chacun en contact avec les zones de connexion 41 des premiers ponts 37 correspondants et les crochets communs 94 sont chacun en contact avec les zones de connexion 42 des deuxièmes ponts 39 correspondants. La mise en contact des crochets de connexion 86 avec les ponts 37, 39 ne nécessite pas d'opération supplémentaire de positionnement du crochet 86 par rapport au pont de connexion 37, 39 respectif. La position des bornes de connexion 100 indique l'orientation initiale à donner à la plaque de connexion 12. Lors de l'opération d'approche, Il n'est pas nécessaire de repositionner les crochets 86, ceux-ci se trouvant alors automatiquement dans la position correcte. Ceci facilite l'automatisation de l'étape d'assemblage de la plaque de connexion 12. Chaque crochet de connexion 86 vient ainsi en contact avec le pont de connexion 37, 39 correspondant du seul fait du déplacement de la plaque de connexion 12 vers le stator 4.

La plaque de connexion 12 a été formée préalablement par solidarisation des bandes de connexion 80 entre elles, par exemple par surmoulage par une matière plastique, par clippage ou par agencement dans un capot commun.

Une fois la plaque de connexion 12 dans sa position assemblée, on soude les ponts de connexion 37, 39 aux crochets de connexion 86 correspondants de manière à connecter électriquement les ponts de connexion 37, 39 aux crochets de connexion 86 correspondants, et donc aux bandes de connexion 80 correspondantes. L'opération de soudage engendre une fusion de la gaine isolante du fil d'enroulement au niveau des zones de soudage.

L'assemblage du moteur électrique selon l'invention est réalisable de manière automatique. En effet, les connexions des enroulements entre eux (point commun) et à la source d'alimentation, sont réalisées du simple fait de l'agencement de la plaque de connexion sur le stator, suivi d'une opération de soudure dans les zones de contact 41, 42 entre les crochets de connexion 86 et les ponts de connexion 37, 39. Cette automatisation est notamment possible grâce aux ponts de connexion 37, 39, qui définissent des zones de connexion 41, 42, dont la position est définie de manière précise. Le positionnement précis des zones de connexion 41, 42 est rendu possible, dans l'exemple précis, par les surfaces d'appui 40, 45 prévues sur l'insert 50 du stator 4. Le positionnement précis des ponts de connexion 37, 39 assure que les crochets de connexion 86 viendront en contact avec les ponts de connexion 37, 39 dans la zone de connexion 41, 42 souhaitée en fonction d'un schéma électronique de connexion souhaité prédéfini.

Le montage est également simplifié grâce à la fourniture des bandes de connexion 80, qui distribuent chacune le courant électrique provenant d'une phase donnée de la source d'alimentation jusqu'à différents enroulements. La structure de la plaque de connexion 12 sous la forme de bandes de connexion 80 évite ainsi une multiplication des fils de connexion entre la source d'alimentation et les enroulements.

Enfin, la formation des ponts de connexion 37, 39 s'étendant entre deux bobines 10 permet de réduire le nombre de connexions nécessaires (dans le cas représenté, 12 connexions au lieu de 24 selon l'état de la technique), chaque zone de connexion 41, 42 étant commune à deux enroulements connectés par un pont de connexion 37, 39.

La disposition parallèle à la plaque de connexion 12 (horizontale sur les figures) des parties du fil d'enroulement formant les ponts de connexion 37, 39 contribue également à faciliter le montage. En effet, cette disposition simplifie la mise en contact des crochets 86 avec les ponts de connexion 37, 39 correspondants.

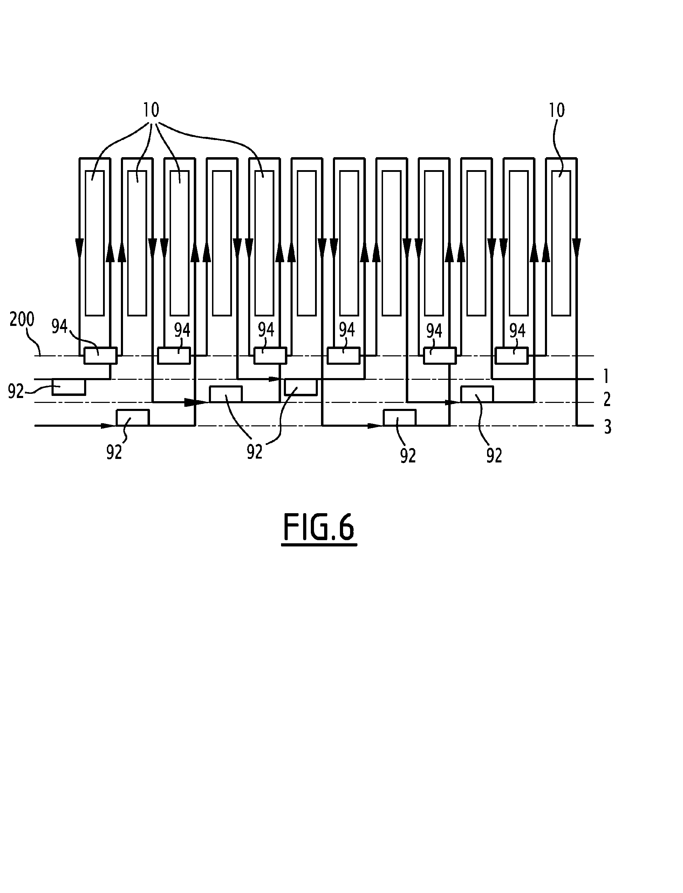

La figure 6 illustre un exemple de schéma de bobinage du stator 4 selon le premier mode de réalisation. Chaque rectangle horizontal dans la partie inférieure de la figure 6 matérialise un crochet de connexion 92 ou 94 en contact avec une zone de connexion d'un pont de connexion 37, 39 respectif correspondant. Les zones de connexion 41, 42 des ponts de connexion 37, 39 sont matérialisées par les traits horizontaux continus dans la partie inférieure de la figure 6, sur lesquels sont dessinés les rectangles correspondant aux crochets de connexion 86 associés.

Les crochets 86 correspondant à un même potentiel électrique sont représentés sur une même ligne horizontale. Ainsi, les crochets communs 94 sont représentés sur une première ligne horizontale 200. Ces crochets communs 94 imposent un potentiel identique à chacune des zones de connexion 42 des ponts de connexion 39 avec lesquelles ils sont en contact de manière à former le point commun du montage en étoile, encore appelé point neutre. Ils sont par exemple connectés à la masse par l'intermédiaire de la bande de connexion 80 correspondante. Les crochets de phase 94 sont répartis sur trois lignes horizontales correspondant chacune à une phase de la source d'alimentation.

Le montage de la figure 6 correspond à un montage en étoile avec, pour chaque phase, deux séries de deux bobines 10 connectées en série, les deux séries étant connectées entre elles en parallèle, connectées entre la phase correspondante de la source d'alimentation par l'intermédiaire d'un crochet de phase 92 et le point commun par l'intermédiaire d'un crochet commun 94. Chaque crochet commun 94 et chaque crochet de phase 92 est commun à deux bobines 10.

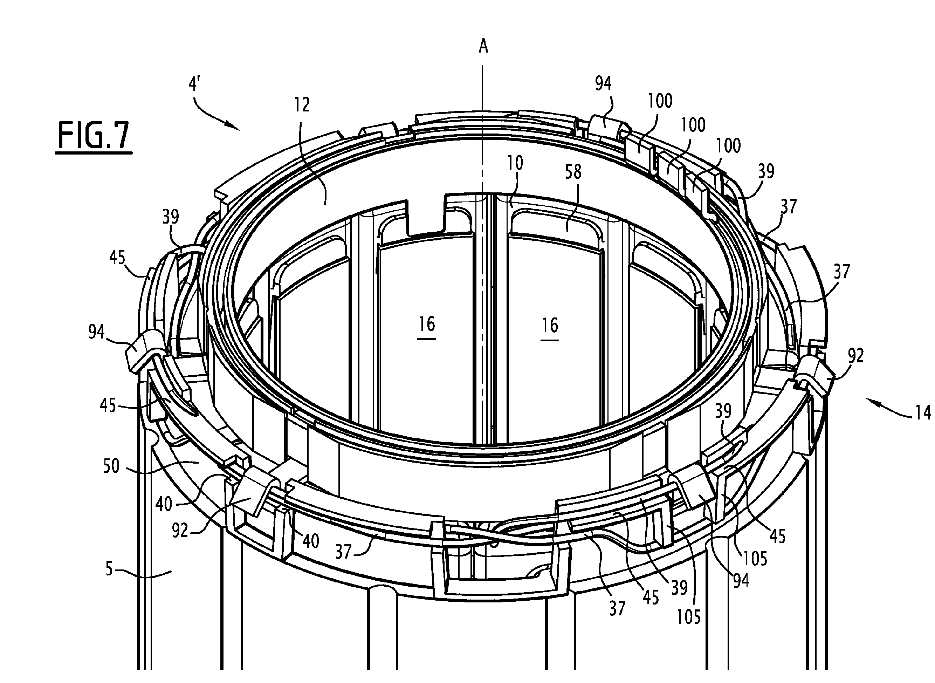

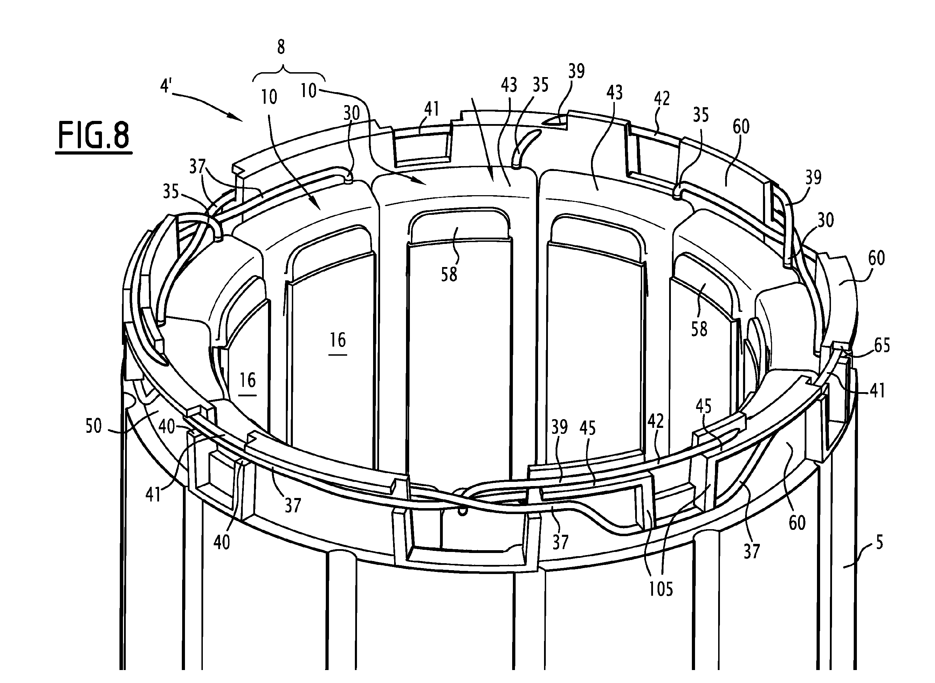

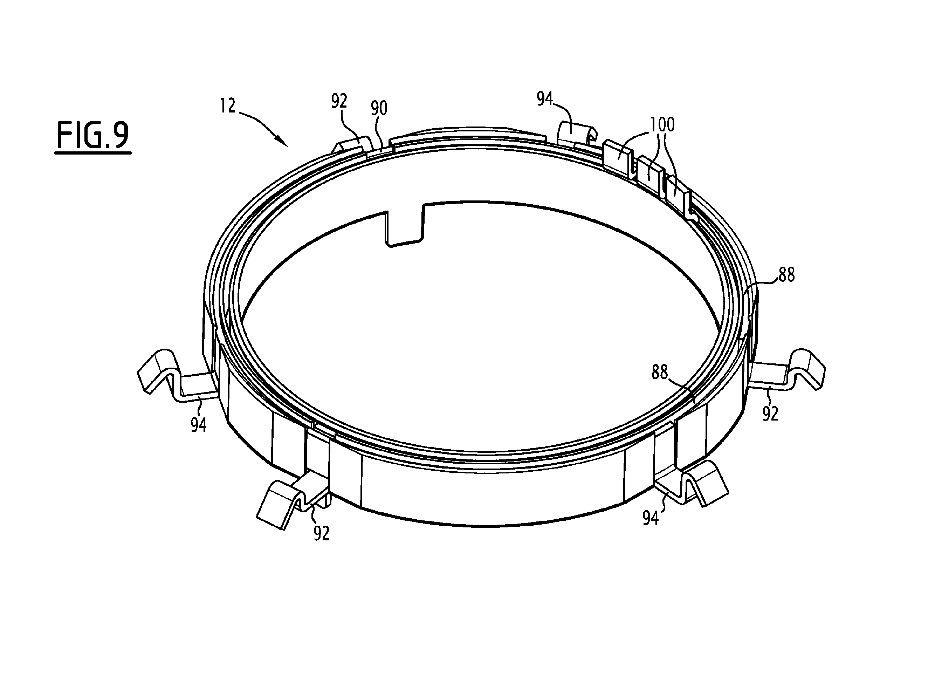

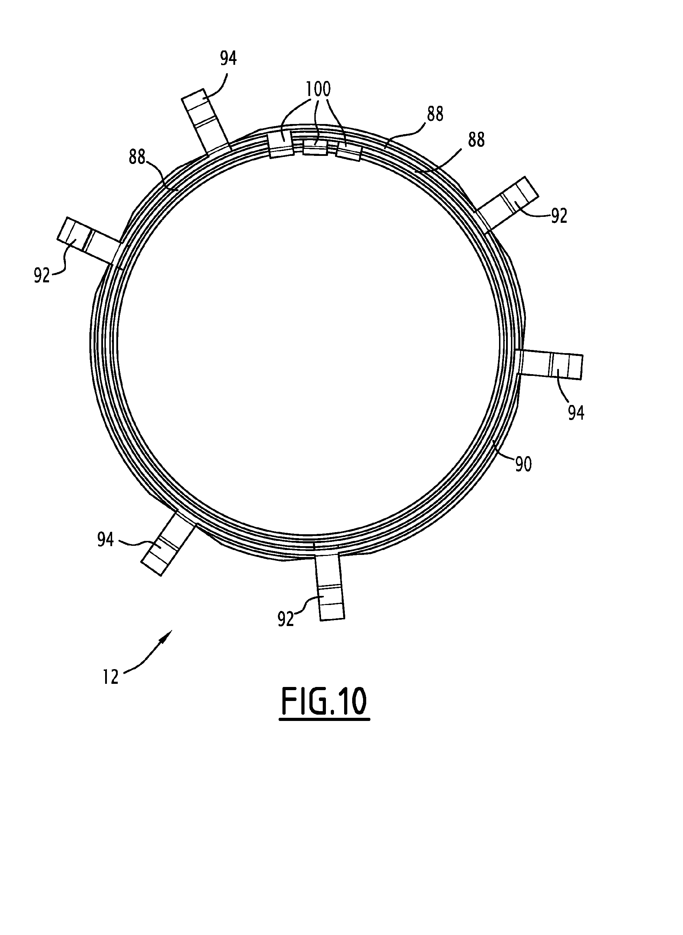

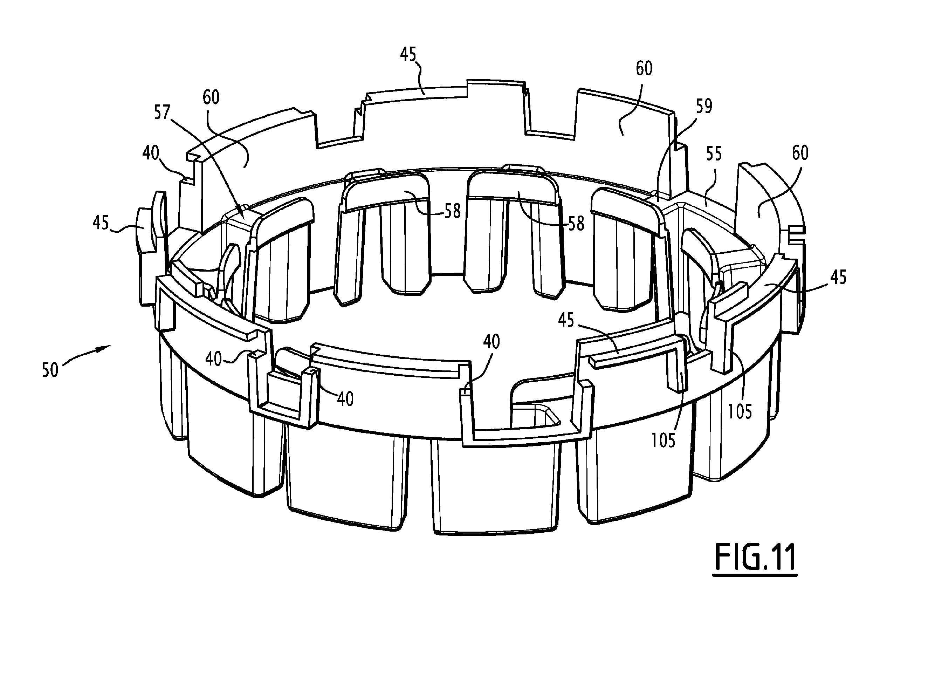

Les figures 7 à 12 illustrent un stator 4' selon un deuxième mode de réalisation. Seules les différences par rapport au premier mode de réalisation sont décrites ci-après. Des numéros de référence identiques ont été utilisés pour désigner des éléments analogues à ceux du premier mode de réalisation.

Dans le deuxième mode de réalisation, chaque ensemble de bobine 8 est formé de deux bobines 10 connectées en série. Chaque bobine 10 de l'ensemble de bobine 8 comprend une première extrémité formant respectivement l'extrémité 30, 35 de l'ensemble de bobine 8 et une deuxième extrémité 110, 112. Les deuxièmes extrémités 110, 112 des bobines 10 de l'ensemble de bobine 8 sont connectées entre elles sans passer par un pont de connexion 37, 39. Les bobines 10 d'un ensemble de bobine 8 sont ainsi connectées en série. Les bobines 10 connectées en série sont des bobines adjacentes selon la circonférence du stator 4.

La plaque de connexion 12 est simplifiée par rapport à la plaque de connexion selon le premier mode de réalisation. Le nombre de crochets de connexion 86 est égal au nombre d'ensembles de bobine 8, c'est-à-dire à la moitié du nombre de bobines 10 du stator 4. En particulier, dans le cas du bobinage en étoile représenté, la plaque de connexion 12 comprend exactement un crochet de phase 92 par phase de la source d'alimentation. Elle comprend en outre trois crochets communs 94. Plus précisément, chaque bande de phase 88 comprend exactement un crochet de phase 92 et la bande commune 90 comprend exactement trois crochets commun 94. Ainsi, la somme du nombre de crochets de connexion électrique de phase 92 et du nombre de crochets de connexion électrique communs 94 est égale à la moitié du nombre de bobines 10 du stator 4.Cette simplification de la plaque de connexion 12 est rendue possible par la réalisation d'ensembles de bobine 8 comprenant deux bobines 10 en série. En effet, pour chaque groupe de deux bobines 10, seules deux connexions électriques à la plaque de connexion 12 (à la phase et au point commun dans le cas du bobinage en étoile) sont nécessaires. En outre, un seul crochet de connexion 86 réalise la connexion électrique à deux ensembles de bobine 8 comme cela a été expliqué en référence au premier mode de réalisation, ce qui simplifie encore la connectique.

Les bandes de connexion 80, c'est-à-dire les bandes de phase 88 et la bande commune 90, présentent chacune une forme de portion de cylindre à base circulaire d'axe confondu avec l'axe A du stator 4. Chaque bande de connexion 80 présente par exemple une épaisseur d'environ 1 mm, prise selon la direction radiale du stator 4 et une hauteur d'environ 4 à 6 mm, prise parallèlement à la direction longitudinale du stator 4. Les bandes de connexion 80 ont des hauteurs sensiblement identiques. Elles sont agencées de manière sensiblement concentrique au sein de la plaque de connexion 12. La plaque de connexion 12 présente une forme annulaire, en particulier sensiblement cylindrique à base circulaire. Le fait de prévoir une plaque de connexion 12 ne comprenant que des bandes de connexion concentriques en forme de portion de cylindre résulte en un gain de place selon la direction radiale du stator 4. En effet, l'encombrement de la plaque de connexion 12 selon la direction radiale est alors relativement faible puisqu'il est environ égal à la somme des épaisseurs des bandes de connexion 80.

Le ou les crochet(s) de connexion 86 font saillie vers l'extérieur à partir de la paroi extérieure de la bande de connexion 80, en particulier d'un bord arrière extérieur de la bande de connexion 80 respective. Ils s'étendent sensiblement suivant une direction radiale. La partie courbe des crochets de connexion 86 en contact avec une zone de connexion 41, 42 est espacée de la paroi extérieure de la bande de connexion 80 selon la direction radiale.

L'espace libre entre la paroi extérieure de la plaque de connexion 12 et les zones de connexion 41, 42 s'étendant entre les surfaces d'appui 40, 45 des pattes de guidage 60 permet de prévoir un espacement entre la paroi extérieure de la plaque de connexion 12 et la partie courbe des crochets de connexion 86 suffisamment important pour permettre le passage des électrodes de soudure qui réalisent le soudage des crochets 86 sur les zones de connexion 41, 42. L'automatisation de l'opération de soudage s'en trouve facilitée. Cet espacement est par exemple supérieur ou égal à 6 mm.

L'insert 50 comprend, sur des pattes de guidage 60 comprenant des deuxièmes surfaces d'appui 45, une nervure d'espacement 105. Cette nervure d'espacement 105 s'étend vers l'arrière sensiblement parallèlement à la direction longitudinale à partir de la deuxième surface d'appui 45. Elle bloque un pont de connexion 37 correspondant à l'encontre d'un déplacement vers l'avant et assure ainsi l'espacement selon la direction longitudinale entre le pont de connexion 37 et la zone de connexion 42 s'étendant au droit de ce pont de connexion 37. La nervure d'espacement 105 facilite l'automatisation de l'assemblage du stator 4 en garantissant que le crochet de phase 94 destiné à venir en contact avec la zone de connexion 42 ne vient pas simultanément en contact avec le pont de connexion 37.

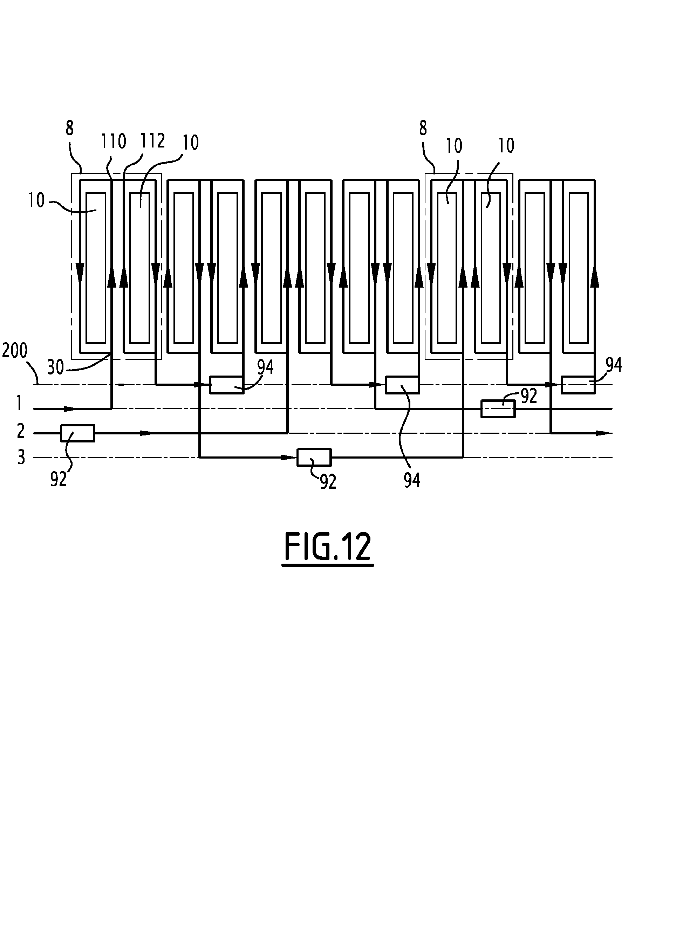

La figure 12 illustre un schéma de bobinage du stator 4' représenté sur les figures 7 à 11. Le montage de la figure 12 correspond à un montage en étoile avec, pour chaque phase, deux ensembles de bobine 8 connectés en parallèle. Chaque ensemble de bobine 8 est connecté entre la phase correspondante de la source d'alimentation (par l'intermédiaire d'un crochet de phase 92) et le point commun du montage en étoile (par l'intermédiaire d'un crochet commun 94). Chaque crochet de phase 92 est commun à deux ensembles de bobine 8. En d'autres termes, chaque enroulement de phase, constitué des deux ensembles de bobine 8 connectés en parallèle, est connecté à exactement un crochet de phase 92. De même, chaque crochet commun 94 est commun à deux ensembles de bobine 8. En d'autres termes, chaque enroulement de phase, constitué des deux ensembles de bobine 8 connectés en parallèle, est connecté à exactement un crochet commun 94.

Comme illustré schématiquement sur la figure 12, la plaque de connexion 12 comprend exactement un crochet de phase 92 par phase, et trois crochets communs 94.

Selon un mode de réalisation du procédé d'assemblage, le bobinage du stator 4, 4' selon le premier ou le deuxième mode de réalisation est réalisé lorsque le corps de stator 5 présente sa forme sensiblement cylindrique finale, c'est-à-dire lorsque le corps de stator 5 est fermé.

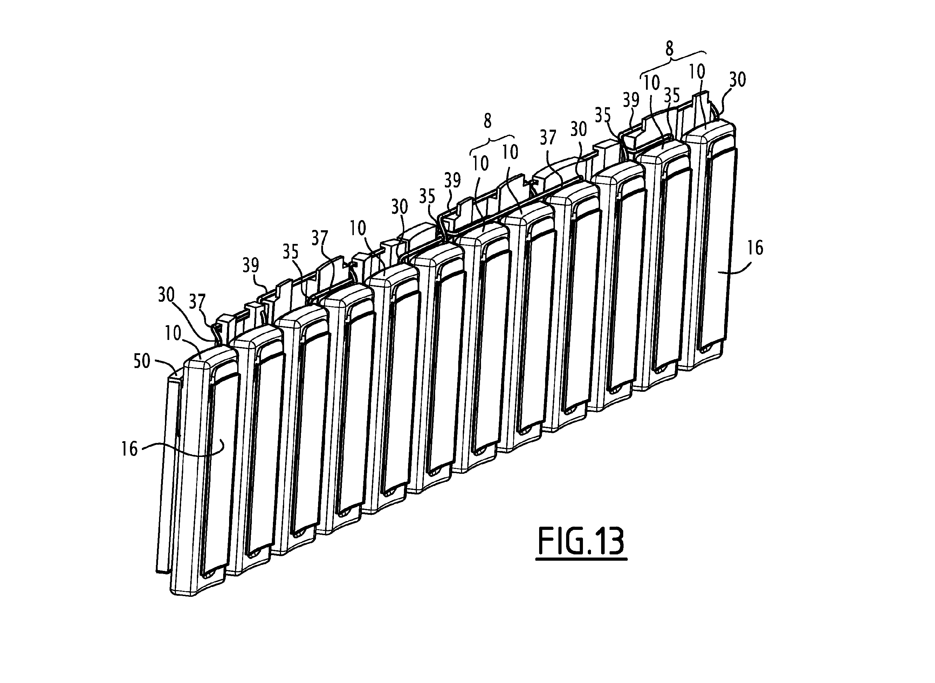

Selon une variante illustrée sur la figure 13, le bobinage du stator 4, 4' est réalisé à plat, c'est-à-dire avec un corps de stator 5 sensiblement plan, avant que le corps de stator 5 ne soit refermé sur lui-même pour aboutir à sa forme sensiblement cylindrique finale. Une fois le bobinage réalisé, on referme le corps du stator 5 sur lui-même pour lui donner sa forme sensiblement cylindrique finale et on agence la plaque de connexion 12 sur l'ensemble ainsi obtenu. Le bobinage du stator 4, 4' à plat maximise le taux de remplissage des bobines ce qui augmente l'induction créée au stator et par conséquent la force électro-motrice du moteur.

## Revendications

1. Moteur électrique comprenant :
- un stator (4) comprenant des dents (16), espacées angulairement autour d'un axe (A) du stator (4),
- au moins deux ensembles de bobine (8), chaque ensemble de bobine (8) comprenant au moins une bobine (10) formée d'au moins un fil électrique enroulé autour d'une dent (16), et
- une plaque de connexion (12) connectant électriquement le ou chaque ensemble de bobine (10) à une source d'alimentation électrique,
**caractérisé en ce que**
une extrémité (30) de chaque ensemble de bobine (10) est reliée à une extrémité (35) d'un autre ensemble de bobine (10) par un pont de connexion (37),
la plaque de connexion (12) comprenant un ensemble de pistes de connexion comprenant au moins une piste de phase (88), connectée électriquement à une phase de la source d'alimentation électrique,
la ou chaque piste de phase (88) étant munie d'un crochet de connexion électrique de phase (92), connecté électriquement à un premier pont de connexion (37) correspondant de manière à connecter électriquement ce premier pont de connexion (37) à la phase correspondante de la source d'alimentation,
le stator (4) comprenant des surfaces de guidage (40, 45) sur lesquelles le pont de connexion (37) prend appui.

2. Moteur électrique selon la revendication 1, dans lequel l'ensemble de pistes de connexion comprend en outre une piste commune (90), laquelle comprend au moins un crochet de connexion électrique commun (94), le ou chaque crochet de connexion électrique commun (94) étant connecté électriquement à un deuxième pont de connexion (39) correspondant de manière à connecter électriquement ce deuxième pont de connexion (39) à la piste commune (90).

3. Moteur électrique selon l'une quelconque des revendications précédentes, dans lequel la source d'alimentation est triphasée, et l'ensemble de pistes de connexion comprend trois pistes de phase (88), connectées chacune à une phase de la source d'alimentation, chaque piste de phase (88) comprenant un crochet de connexion électrique de phase (92) connecté électriquement à un pont de connexion (37) correspondant de manière à connecter électriquement ce pont de connexion (37) à la phase correspondante de la source d'alimentation.

4. Moteur électrique selon la revendication 3, prise en combinaison avec la revendication 2, dans lequel la somme du nombre de crochets de connexion électrique de phase (92) et du nombre de crochets de connexion électrique communs (94) est inférieure ou égale au nombre de bobines (10) du stator (4).

5. Moteur électrique selon la revendication 3, dans lequel la somme du nombre de crochets de connexion électrique de phase (92) et du nombre de crochets de connexion électrique communs (94) est égale à la moitié du nombre de bobines (10) du stator (4).

6. Moteur électrique selon l'une quelconque des revendications précédentes, dans lequel chaque bobine (10) comprend une tête de bobine avant (43) orientée vers la plaque de connexion (12), et dans lequel le ou chaque premier pont de connexion (37) comprend une zone de connexion (41) en contact avec un crochet de connexion électrique de phase (92) correspondant, la zone de connexion (41) étant espacée des têtes de bobine avant (43) parallèlement à l'axe (A) du stator (4).

7. Moteur électrique selon l'une quelconque des revendications précédentes, dans lequel le ou chaque premier pont de connexion (37) comprend une zone de connexion (41) en contact avec un crochet de connexion électrique de phase (92) correspondant, et dans lequel la zone de connexion s'étend sensiblement perpendiculairement à l'axe (A) du stator (4).

8. Moteur électrique selon la revendication 7, dans lequel le ou chaque crochet de connexion électrique de phase (92) délimite un fond de crochet, en contact avec la zone de connexion (41) du premier pont de connexion (37) correspondant, le fond de crochet s'étendant sensiblement perpendiculairement à l'axe (A) du stator (4).

9. Moteur électrique selon l'une quelconque des revendications 6 à 8, dans lequel les surfaces de guidage (40, 45) sont prévues sur un insert (50) et sont espacées entre elles suivant la circonférence du stator (4) et espacées chacune des têtes de bobine avant (43) parallèlement à l'axe du stator (4), et dans lequel le ou chaque pont de connexion (37, 39) est reçu en appui sur au moins deux surfaces de guidage (40, 45) adjacentes selon la circonférence du stator (4), la zone de connexion (41, 42) du pont de connexion (37, 39) étant formée par une partie du pont de connexion (37, 39) localisée entre ces deux surfaces de guidage (40, 45).

10. Moteur électrique selon la revendication 9, dans lequel les surfaces de guidage (40, 45) s'étendent chacune sensiblement normalement à l'axe (A) du stator (4), en particulier suivant la circonférence du stator (4).

11. Moteur électrique selon l'une quelconque des revendications précédentes, dans lequel au moins un premier ensemble de bobine (8) et un deuxième ensemble de bobine (8) sont formés à partir d'un même fil d'enroulement, le pont de connexion (37) entre le premier ensemble de bobine (8) et le deuxième ensemble de bobine (8) étant formé par une partie dudit fil d'enroulement s'étendant entre l'extrémité (30) du premier ensemble de bobine (8) et l'extrémité (35) du deuxième ensemble de bobine (8) reliées entre elles par le pont de connexion (37).

12. Moteur électrique selon l'une quelconque des revendications précédentes, dans lequel la ou chaque piste de connexion est formée par une pièce conductrice de courant en forme d'arc de cercle (80).

13. Moteur selon l'une quelconque des revendications précédentes, dans lequel l'ensemble de pistes de connexion comprend au moins deux pistes de connexion solidarisées mécaniquement entre elles, notamment par surmoulage par une matière plastique ou par clippage.

14. Procédé d'assemblage d'un moteur électrique selon l'une quelconque des revendications précédentes, **caractérisé en ce qu'**il comprend les étapes de :
- former au moins deux ensembles de bobine (10) par enroulement d'un fil d'enroulement autour de dents (16) correspondantes du stator (4) et relier une extrémité (30) de chaque ensemble de bobine (10) à une extrémité (35) d'un autre ensemble de bobine (10) par un pont de connexion (37), le pont de connexion (37) comprenant une zone de connexion (41) destinée à venir en contact avec un crochet de connexion (92) correspondant de la plaque de connexion (12) ;
- assembler la plaque de connexion (12) d'une pièce au stator (4) en approchant la plaque de connexion (12) vers le stator (4) selon la direction longitudinale chaque crochet de connexion (86) étant disposé au droit d'une zone de connexion d'un pont de connexion (37) correspondant jusqu'à ce que la plaque de connexion (12) arrive en butée sur le stator (4), chaque crochet de connexion (86) étant alors en contact avec la zone de connexion (41) du pont de connexion (37) correspondant.
